# EUROPEAN PATENT APPLICATION

(11) **EP 4 650 894 A1**
(43) Date of publication of application: **19.11.2025**
(21) Application number: 24175346.6
(22) Date of filing: 13.05.2024
(51) Int. Cl.: G05B 19/418, G06T 7/00, G06V 10/00

(54) **IN-PROCESS QUALITY CONTROL MODULE FOR CONTROLLING THE QUALITY OF AN OBJECT**

(71) Applicant: BULL SAS, 78340 Les Clayes-sous-Bois (FR)
(72) Inventor: PARSAI, Dinesh, Pune (IN); MOHITE, Sandeep, Pune (IN)
(74) Representative: Argyma

(57) **Abstract**

The invention relates to an in-process quality control module (13) for controlling the quality of an object (2), said quality control module (13) being configured to receive an input allowing to determine the type of object (2) to analyze, determine the type of object (2) using said received input, retrieve from the database (12) the reference images corresponding to the determined type of object (2), receive images generated by a camera module (111), compare said received images with the retrieved reference images, determine that the object (2) is compliant with the determined type of object (2) when the received images of the sequence match with the retrieved reference images, output on the user interface (112) of the control device (13) that the object (2) is compliant or not compliant.

## Description

### [Field of the invention]

The invention relates to the field of in-process quality control and, more particularly, to a device and a method for the verification of equipment and products.

### [Background of the invention]

In various manufacturing processes, the verification of the physical conformity of the products is of paramount importance.

For instance, in the manufacturing of pharmaceutical products, the verification of the physical conformity of solid dosage forms such as pills and tablets is critical. As noted in United States Food and Drugs Administration's guideline "Size, Shape, and Other Physical Attributes of Generic Tablets and Capsules" (June 2015), tablet size is critical in the ease of administration and improves patient compliance with the therapeutic regimen.

The verification of the tools used in the production line, notably the punch tools used for pressing the tablets in these pharmaceutical processes, is then very important in Quality control checks, especially In-Process Quality Control (IPQC). Presently the verification is done by manual methods or in few cases using highly sophisticated instruments.

In the example of the pharmaceutical process, the tablet size is decided by the size of the punch tooling used during powder compression. In most practical situations, the size of the punch tip is either controlled manually using Vernier Caliper or the operator relies solely on the engravings marked by the punch tool manufacturer.

However, as the manufacturing process is highly complex and involves many unit operations, steps, or activities to deliver a single product, there is a possibility of human errors while recording the in-process quality control data manually.

Several solutions have been developed to reduce the number of tasks and the human intervention. For instance, in pharmaceutical processes, the document US10598605B2 presents a device that is positioned on the tool to measure the physical parameters and sends them in a computing system right away. This enables the operator to carry out better measurements and to reduce errors, but the device may be difficult to set up correctly and the set-up/dismount time may be high.

The known prior art solutions require specific physical arrangement to measure the punch dimensions or to record the punch surface texture. Also, the prior art solutions require a set of individual components or instruments and a combination of manual and automated efforts. The manual components will require further calibration efforts.

It is therefore an object of the present invention to provide a device and method to remedy at least partly these drawbacks.

### [Summary of the invention]

To this end, the present invention relates to an in-process quality control module for controlling the quality of an object, said quality control module being configured to:
- receive an input allowing to determine the type of object to analyze,
- determine the type of object using said received input,
- retrieve from the database the reference images corresponding to the determined type of object,
- receive images generated by a camera module,
- compare said received images with the retrieved reference images,
- determine that the object is compliant with the determined type of object when the received images of the sequence match with the retrieved reference images,
- output on a user interface of the control device that the object is compliant or not compliant.

In the context of the invention, "to match" means that the comparison carried out by the quality control module determines that the object has the same characteristics as required and as the reference images show.

The invention enables a quick and reliable control method for a wide variety of objects within a production line, such as tools or products. The objects may be controlled in real-time, without the necessity to wait for the results before validating the object. The database provides the set of reference images, and the quality control module process the sequence of images of the object generated by the camera module without requiring a precise input by the operator, which streamlines the process. The sequence of images allows to determine if the object matches with the reference images from various points of view and the resulting redundancy insures the assessment of the compliance.

Preferably, the quality control module comprises a machine-learning module, said quality control module being configured to compare the received images with the retrieved reference images using said machine-learning module.

Preferably, the quality control module is configured to output on the user interface of the control device that the object is not compliant when the quality control module determines that the object is not compliant. The output signals to the operator that the faulty object is to be replaced.

According to an aspect of the invention, the invention also relates to a quality control system for an object, said object having characteristics such as its dimensions, its surface state, its shape, its color, said system comprising a control device, a database and a quality control module, said control device comprising a camera module and a user interface, said camera module being configured to generate a sequence of images of said object, said database being configured to store a plurality of sets of reference images corresponding to a plurality of types of objects.

Advantageously, the control device comprises the camera module, the quality control module, and the database. The control device is compact, autonomous, and convenient to use for the operator.

Alternatively, the database is stored on an external server linked to the control device by a communication link. A centralized database is more convenient to manage a large number of simultaneous controls.

Advantageously, the control device further comprises a scanner module configured to receive an identification sequence of images representing a code, to extract said code received from said identification sequence of images and to identify the type of object using said extracted code. This identification allows the quality control module to register the exact type of object controlled, when the nature of the object allows the inscription on a code on it, i.e. when the object is a solid. The code may also contain traceability information on the object, such as the date of production, the production lot etc.

For example, the code on the object may be a barcode or a QR-code.

Preferably, the control device comprises a distance sensor which is configured to provide to the quality control module an input representing the distance between the control device and the object, said distance being used by the quality control module during the step of determination of the compliance of object. The distance sensor allows the quality control module to use the distance between the control device and the object to scale the images of the generated sequence of image in order to perform a straightforward comparison with the reference images.

For example, the distance sensor may be a LIDAR sensor (Laser Imaging, Detection, And Ranging) or an ultrasound emitter/receiver.

In addition, or in alternative of the embodiment of the quality control system, the control device comprises a surface-mapping sensor which is configured to provide to the quality control module an input representing a 3D mapping of the surface of the object, said 3D mapping of the surface being used by the quality control module during the step of determination of the compliance of the object. The mapping sensor allows the quality control module to take into account the surface state of the object. As a defect on the surface state may cause malformations during the manufacturing if the object is a tool used in production or may indicate a manufacturing problem if the object is a product, the control of the object must take the surface into account in order to assess the compliance.

For example, the surface-mapping sensor may be a LI DAR sensor or an ultrasound emitter/receiver.

Advantageously, the control device comprises a mixed-reality display. The mixed-reality display may be used to guide the operator during the quality control method, notably when the operator generates the sequence of images.

Preferably, the control device is a smartphone or iPad or a tablet. These devices are already widely used, and the modules required for the quality control method may be easily installed in a personal or professional existing smartphone, iPad, or tablet.

Alternatively, the control device is embedded into smart glasses. This device allows the operator to have both their hands free during the quality control method.

Alternatively, the control device is embedded into a computer. The computer may be faster and dispose of more memory and calculation power for the quality control.

According to another aspect of the invention, the invention relates to a manufacturing set comprising an object and an in-process quality control system as presented.

The invention also relates to a method of in-process quality control of an object using a quality control system as presented, said method comprising the steps of:
- opening, by the operator, the quality control module on the control device,
- sending to the quality control module an input allowing to determine the type of the object,
- determining, by the quality control module, of the type of object using said received input,
- retrieving from the database the reference images corresponding to the determined type of object,
- generating a sequence of images, by the camera module, of the object,
- comparing, by the quality control module, the generated sequence of images with the retrieved reference images,
- comparing, by the quality control module, the compliance of the object with the determined type of object when the received images of the sequence match with the retrieved reference images,
- if the compliance of the object is validated, sending a confirmation to the operator on the user interface of the control device.

The method provides a fast and reliable process to assess the compliance of an object on the line of production.

Advantageously, the method of quality control of an object is carried out by a quality control system whose quality control module comprises a machine-learning module, and the step of comparison of the generated sequence of images with the retrieved reference images and the step of determination of the compliance are carried out using the machine learning module, the method further comprising a step of storing in the database the generated sequence of images and the result of the determination of the compliance to further train the machine learning module. This enables the training of the machine-learning module in order to optimize its performances in further quality control operations.

### [Brief description of the drawings]

These and other features, aspects, and advantages of the present invention are better understood with regard to the following Detailed Description of the Preferred Embodiments, appended Claims, and accompanying Figures, where:
FIGURE 1 schematically illustrates a pharmaceutical set comprising a pharmaceutical tablet punch and an embodiment of a quality control system according to the invention.
FIGURE 2 schematically illustrates a rear view of the control device of the embodiment of the quality control system according to the invention.

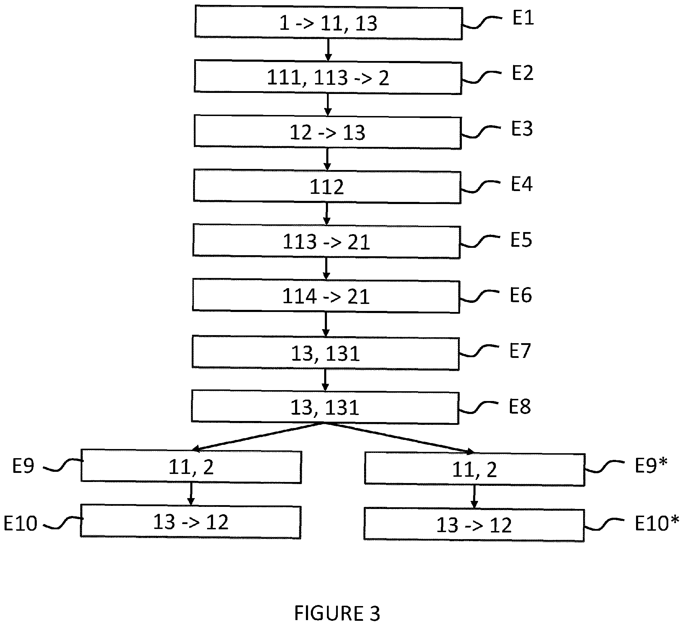

FIGURE 3 schematically illustrates an embodiment the method of quality control according to an aspect of the invention.

### [Detailed description]

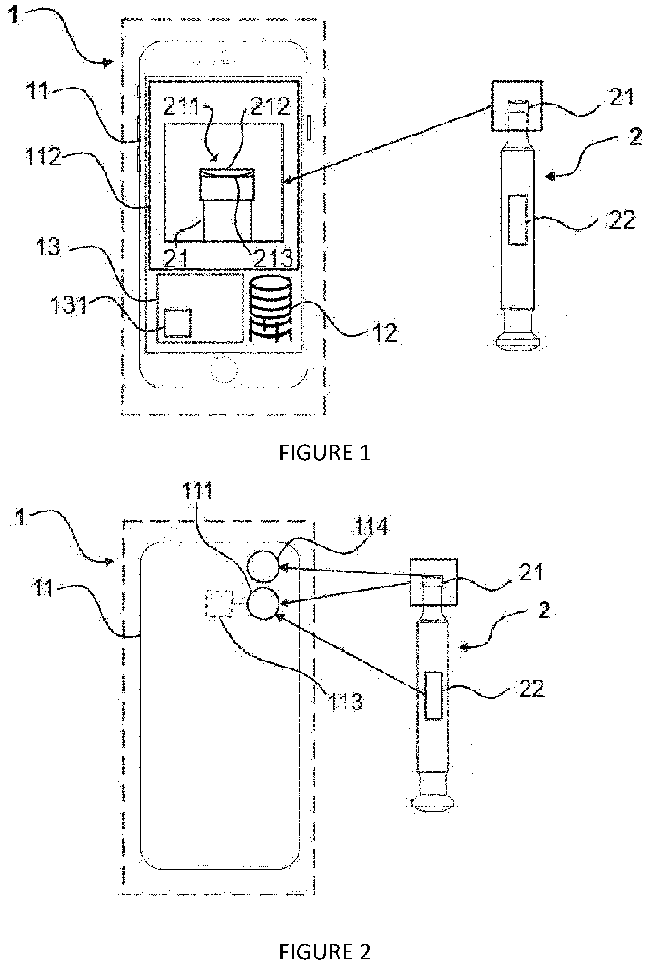

Figure 1 represents an embodiment of the quality control system 1 used to identify and control an object 2, which in this example of operation is a pharmaceutical set comprising a pharmaceutical tablet punch 2.

### Quality control system 1

As represented on figure 1, the quality control system 1 comprises a control device 11, a database 12 and a quality control module 13.

### Control device 11

In the embodiment represented on figure 1, the control device 11 is a smartphone.

In other embodiments, the control device 11 may be a tablet, an iPad, a computer, or a pair of smart glasses.

As represented on figures 1 and 2, the control device 11 comprises a camera module 111, a user interface 112, a scanner module 113 and a distance and surface sensor 114.

In the embodiment represented on figure 1, the database 12 and the quality control module 13 are embedded into the control device 11.

In other embodiments, the database 12 and/or the quality control module 13 could be installed on an external server linked to the control device 11 with a communication link.

### Camera module 111

The camera module 111 is configured to generate a sequence of images. On the embodiment represented on figure 2, the camera module 111 is the camera of the control device 11.

In other embodiments of the control device 11, the camera module 111 may be a camera or a webcam embedded on a pair of smart glasses or a computer.

### User interface 112

The user interface 112 allows the operator to open the quality control module 13 and to receive the results of the quality control method.

In an embodiment, the user interface 112 may also be used by the operator for manually enter the type of pharmaceutical tablet punch 2 to be assessed.

In the broader case where the object 2 does not present a code 22, such as a solution, a powder etc., the operator manually enters the type of object 2 to be assessed.

In a preferred embodiment, the user interface 112 guides the operator through the quality control method in order to ensure the results of the process.

The user interface 112 may generate mixed reality (MR) graphic elements, notably over the parts of interest of the pharmaceutical tablet punch 2, in order to further guide the operator during the quality control method. For example, the graphic elements may display in real-time the dimensions of the pharmaceutical tablet punch 2 measured by the quality control module 13.

### Scanner module 113

The scanner module 113 is configured to extract an identification code 22 on the pharmaceutical tablet punch 2 and to process the code 22 in order to identify the precise type of pharmaceutical tablet punch 2.

The identification of the pharmaceutical tablet punch 2 may also give traceability information on the controlled pharmaceutical tablet punch 2.

The code 22 is advantageously a barcode or a QR-code.

Preferably, the scanner module 113 use a sequence of pictures generated by the camera module 111.

In other embodiments, the scanner module 113 comprises a specific sensor that the operator uses to scan the code 22 before the identification.

### Distance and surface sensor 114

The distance and surface sensor 114 is configured to measure the distance between the control device 11 and the object 2 and to generate a 3D mapping of the surface of the object 2 and to send the measurements and the 3D mapping to the quality control module 13.

In the example illustrated on figures 1 and 2, the distance and surface sensor 114 measures the distance between the control device 11 and the tip 21 of the pharmaceutical tablet punch 2 and generates a 3D mapping of the internal surface of the cavity 213.

Preferably, the distance and surface sensor 114 is based on a laser emitter/receiver using LIDAR (Laser Imaging, Detection, And Ranging) technology.

Alternatively, the measurement of the distance may be carried out using an ultrasound emitter/receiver.

### Database 12

The database 12 comprises reference images corresponding to each type of object 2 to be used by an operator on the line of production.

In the embodiment represented on figures 1 and 2, the reference images for one given type of pharmaceutical tablet punch 2 comprises several pictures of the tip 21 of the pharmaceutical tablet punch 2 from different angles and points of view.

The database 12 may also store measured characteristics of each type of pharmaceutical tablet punch 2, such as the diameter of the opening 212, the depth of the cavity 213 and the state of the internal surface of the cavity 213.

### Quality control module 13

The quality control module 13 is configured to receive an input allowing to determine the type of the pharmaceutical tablet punch 2.

The input may be received from the scanner module 113, as in the embodiment shown on figure 2, or from the user interface 112 when said input is an instruction given by the operator, for example a command typed on the user interface 112 or a tactile command input on the user interface 112.

The quality control module 13 is configured to determine the type of the pharmaceutical tablet punch 2 using said received input.

The quality control module 13 is configured to retrieve from the database 12 the reference images corresponding to the to be determined type of pharmaceutical tablet punch 2.

The quality control module 13 is configured to receive the images of the sequence generated by the camera module 111.

The quality control module 13 is configured to determine characteristics of the pharmaceutical tablet punch 2 such as its dimensions, its surface state, its shape, its color from the received images.

The quality control module 13 is configured to send the measured characteristics the user interface 12 in real-time.

The quality control module 13 is configured to compare the received images with the retrieved reference images from the database 12. The comparison is carried out using the machine-learning module 131. The comparison also use the characteristics measured.

The quality control module 13 is configured to determine that the pharmaceutical tablet punch 2 is compliant with the determined type of pharmaceutical tablet punch 2 when the received images of the sequence match with the retrieved reference images.

The quality control module 13 is configured to output on the user interface 112 of the control device 11 that the pharmaceutical tablet punch 2 is either compliant or non-compliant.

The quality control module 13 is configured to generate electronic report of the in-process quality control of the pharmaceutical tablet punch 2 and to store it, either in the database 12 or in another server.

### Machine Learning Module 131

In the embodiment shown on figure 1, the machine learning module 131 is part of the quality control module 13. The machine learning module 131 is configured to carry out the step of comparison of the received images with the retrieved reference images from the database 12 using machine-learning techniques.

The machine learning module 131 is trained before use on several reference cases.

In another embodiment, the machine learning module 131 is located outside of the control device 11 and is linked to the quality control module 13 by a communication link.

### Pharmaceutical tablet punch 2

In the example represented on the figures 1 and 2, the object 2 is a pharmaceutical tablet punch 2.

As represented on figure 1, the pharmaceutical tablet punch 2 comprises a tip 21 used to process a pharmaceutical product from a powder to a tablet or a pill of a given shape and a code 22 used to identify the type of pharmaceutical tablet punch 2.

The tip 21 have a surface 211 delimitating an opening 212 on a cavity 213 for conforming said pharmaceutical tablet.

More generally, the object 2, whether it is a pharmaceutical tablet punch as in the example represented on figures 1 and 2 or any kind of object, may be defined by its shape, its size (diameter, dimensions) and their cavity and/or engravings. In the case of tablet punches, the tip 21 may have a flat surface and/or beveled edges, and their compliance is assessed by the control device 11.

To ensure that the tablets produced with that pharmaceutical tablet punch 2 are in conformity with their designed shape and use, the characteristics dimensions of the opening 212 and of the cavity 213 must be controlled by an operator.

The surface state of the surface 211 and of the cavity 213 are also important factors, as a surface defect may result in tablets with the wrong shape or tablets with erroneous markings on them.

According to the type of pharmaceutical product the pharmaceutical tablet punch 2 is designed to produce, the dimensions of the opening 212 and of the cavity 213 are different. When the production line is switched to produce a different type of pharmaceutical product, every pharmaceutical tablet punch 2 must be replaced.

The code 22 may be advantageously in the form of a barcode or a QR code and contains unique information identifying the type of pharmaceutical tablet punch 2 and give traceability data of a given pharmaceutical tablet punch 2.

The traceability data may contain information about the pharmaceutical tablet punch 2 such as a material code, the date of receipt, the date of last use etc.

### Example of operation

Before the manufacturing of a given pharmaceutical product an operator carries out the inspection in real-time of the pharmaceutical tablet punches 2 to be mounted in the production line in order to ensure their conformity to the chosen product.

For each pharmaceutical tablet punch 2, the operator uses the control device 11 of the in-process quality control system 1.

In a step E1, the operator opens the quality control module 13 on the control device 11.

In a step E2, the operator scans the code 22 of the pharmaceutical punch tool 2. In this step, the operator generates a sequence of images of the code 22 with the camera module 111. This sequence of images is then sent to the scanner module 113. The scanner module 113 carries out the analysis of the code 22.

The quality control system 1 identify the pharmaceutical punch tool 2 based on the analysis of the code 22.

Alternatively, the operator may directly enter on the user interface 112 the type of the pharmaceutical punch tool 2.

In a step E3, the quality control module 13 sends a request to the database 12 and receives the reference images stored in said database 12 corresponding to the type of the pharmaceutical punch tool 2 identified.

In a step E4, the user interface 112 displays the instructions for the user to generate the several sequences of images of the tip 21 through the camera module 111.

In a step E5, the sequence of images is generated through the camera module 111.

In a step E6, the operator uses the distance and surface sensor 114 to measure the distance between the control device 11 and the tip 21 and to generate a 3D mapping of the opening 212 and of the cavity 213.

In a step E7, the quality control module 13 compares the generated sequence of images with the retrieved reference images from the database 12.

The comparison is based on the real-time measurement of the dimensions of the tip 21, extracted from the sequence of images generated, and the real-time measurement of the surface state of the cavity 213 and the 3D mapping of the opening 212.

If the object 2 is a tablet, a powder or a solution, the comparison is also based on the color of the object 2 extracted from the sequence of images.

In this step, the machine-learning module 131 is used to apply artificial intelligence technique to the analysis, to speed up the process and enhance the performances of the method. The reference pictures stored in the database 12 are used to train the machine learning-module 131.

Furthermore, the distance between the control device 11 and the tip 21 and the 3D mapping are used to scale the images taken by the operator and to consider the surface state in the control method more accurately.

During this step, the quality control module 13 sends in real time the measured characteristics to the user interface 112. The user interface 112 displays the measured characteristics over the images taken of the tip 21, enhancing the quality control process with a mixed-reality display.

In a step E8, the quality control module 13 determines whether the pharmaceutical tablet punch 2 is compliant with the determined type of pharmaceutical tablet punch 2.

The pharmaceutical tablet punch 2 is determined to be compliant if the received images of the sequence match with the retrieved reference images and the surface state of the tip 21 is in accordance with the reference images.

If the pharmaceutical tablet punch 2 is compliant, the quality control system 1 sends in a step E9 a request to the control device 11 in order to display on the user interface 112 a message of validation of the pharmaceutical tablet punch 2 for the operator, indicating that the pharmaceutical tablet punch 2 is validated and allowing them to continue the control of the production line.

In a step E10, the quality control module 13 sends the generated sequence of images of the validated pharmaceutical tablet punch 2 to the database 12 to be used in future verifications.

If the pharmaceutical tablet punch 2 is not compliant, the quality control system 1 sends in a step E9* a request to the control device 11 in order to display on the user interface 112 a message of invalidation of the pharmaceutical tablet punch 2 for the operator, indicating that the pharmaceutical tablet punch 2 is not correct and should be changed before the start of the manufacturing.

In this step, the traceability information provided by the code 22 enables to track others pharmaceutical tablet punches 2 that have been produced with the faulty pharmaceutical tablet punch 2 in order to check on them.

In a step E10*, the quality control system 1 sends the generated sequence of images of the invalidated pharmaceutical tablet punch 2 to the database 12 to be used in future verifications.

The compliance results (i.e. compliant or not compliant) are used to further train the machine-learning module 113 for future verifications on the various types of pharmaceutical tablet punches 2.

The device and method according to the invention allow therefore to efficiently, rapidly, and easily assess the compliance of the tool during production.

After the step E10 and E10*, a complete electronic report of the in-process quality control of the pharmaceutical tablet punch 2 is generated and stored, either in the database 12 or in another server. The electronic report is used to have a proof of the quality control for the traceability of the pharmaceutical tablet punch 2.

Other applications are covered by the invention, as it is possible to control the quality of any kind of surface or manufacturing tool using the control device 11 and the method according to the invention.

Furthermore, it is also possible to control products, based on their shape, their surface, their color, using the control device 11. These products can be powders, tablets, but also solutions and various objects.

The Specification, which includes the Summary of Invention, Brief Description of the Drawings and the Detailed Description of the Preferred Embodiments, and the appended Claims refer to particular features (including process or method steps) of the invention. Those of skill in the art understand that the invention includes all possible combinations and uses of particular features described in the Specification. Those of skill in the art understand that the invention is not limited to or by the description of embodiments given in the Specification but defined by the claims.

## Claims

1. An in-process quality control module (13) for controlling the quality of an object (2), said quality control module (13) being configured to:
- receive an input allowing to determine the type of object (2) to analyze,
- determine the type of object (2) using said received input,
- retrieve from the database (12) the reference images corresponding to the determined type of object (2),
- receive images generated by a camera module (111),
- compare said received images with the retrieved reference images,
- determine that the object (2) is compliant with the determined type of object (2) when the received images of the sequence match with the retrieved reference images,
- output on a user interface (112) of the control device (13) that the object (2) is compliant or not compliant.

2. A quality control module (13) according to claim 1, said quality control module (13) comprising a machine-learning module (131), said quality control module (13) being configured to compare the received images with the retrieved reference images using said machine-learning module (131).

3. A quality control system (1) for an object (2), said object (2) having characteristics such as its dimensions, its surface state, its shape, its color, said system (1) comprising a control device (11), a database (12) and a quality control module (13) according to any of the preceding claims, said control device (11) comprising a camera module (111) and a user interface (112), said camera module (111) being configured to generate a sequence of images of said object (2), said database (12) being configured to store a plurality of sets of reference images corresponding to a plurality of types of objects (2).

4. A quality control system (1) according to claim 3, wherein the control device (11) comprises the camera module (111), the database (12) and the quality control module (13).

5. A quality control system (1) according to claim 3, wherein the database (12) is stored on an external server linked to the control device (11) by a communication link.

6. A quality control system (1) according to any of claims 3 to 5, wherein the control device (11) further comprises a scanner module (113) configured to receive an identification sequence of images representing a code (22), to extract said code (22) received from said identification sequence of images and to identify the type of object (2) using said extracted code (22).

7. A quality control system (1) according to any of claims 3 to 6, wherein the control device (11) comprises a distance sensor (114) which is configured to provide to the quality control module (13) an input representing the distance between the control device (11) and the object (2), said distance being used by the quality control module (13) during the step of determination of the compliance of the object (2).

8. A quality control system (1) according to any of claims 3 to 7, wherein the control device (11) comprises a surface-mapping sensor (114) which is configured to provide to the quality control module (13) an input representing a 3D mapping of the surface of the object (2), said 3D mapping of the surface being used by the quality control module (13) during the step of determination of the compliance of the object (2).

9. A quality control system (1) according to any of claims 3 to 8, wherein the control device (11) comprises a mixed-reality (MR) display.

10. A quality control system (1) according to any of claims 3 to 9, wherein the control device (11) is a smartphone, an iPad, or a tablet.

11. A quality control system (1) according to any of claims 3 to 9, wherein the control device (11) is embedded into smart glasses.

12. A quality control system (1) according to any of claims 3 to 9, wherein the control device (11) is embedded into a computer.

13. A manufacturing set comprising an object (2) and an in-process quality control system (1) according to any of claims 3 to 12.

14. A method of in-process quality control of an object (2) using a quality control system (1) according to any claims 3 to 13, said method comprising the steps of:
- opening (E1), by the operator, the quality control module (13) on the control device (11),
- sending to the quality control module (13) an input allowing to determine the type of the object (2),
- determining (E2), by the quality control module (13), of the type of object (2) using said received input,
- retrieving (E3), from the database (12) the reference images corresponding to the determined type of object (2),
- generating (E5) a sequence of images, by the camera module (111), of the object (2),
- comparing (E7), by the quality control module (13), the generated sequence of images with the retrieved reference images,
- determining (E8), by the quality control module (13), the compliance of the object (2) with the determined type of object (2) when the received images of the sequence match with the retrieved reference images,
- if the compliance of the object (2) is validated, sending (E9) a confirmation to the operator on the user interface (112) of the control device (11).

15. A method of quality control of an object (2) according to the preceding claim, wherein the quality control system (1) comprises a quality control module (13) according to claim 2, and wherein the steps of comparison of the generated sequence of images with the retrieved reference images and the step of determination of the compliance are carried out using the machine learning module (131), the method further comprising a step of storing in the database (12) the generated sequence of images and the result of the determination of the compliance to further train the machine learning module (131).
